(19) Europäisches Patentamt
European Patent Office
Office européen des brevets

(11) EP 3 351 846 A1

(12) EUROPEAN PATENT APPLICATION
published in accordance with Art. 153(4) EPC

(43) Date of publication:
25.07.2018 Bulletin 2018/30

(21) Application number: 16846341.2

(22) Date of filing: 07.09.2016

(51) Int Cl.:
*F17C 1/10* (2006.01) *F16J 12/00* (2006.01)

(86) International application number:
PCT/JP2016/076310

(87) International publication number:
WO 2017/047470 (23.03.2017 Gazette 2017/12)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 14.09.2015 JP 2015180746

(71) Applicant: Zeon Corporation
Tokyo 100-8246 (JP)

(72) Inventors:
- KOHINATA Yuko
Tokyo 100-8246 (JP)
- HYAKUTAKE Munehiro
Tokyo 100-8246 (JP)

(74) Representative: Adam, Holger
Kraus & Weisert
Patentanwälte PartGmbB
Thomas-Wimmer-Ring 15
80539 München (DE)

# (54) GAS-FILLED CONTAINER FILLED WITH FLUORINATED HYDROCARBON COMPOUND, METHOD FOR MANUFACTURING GAS-FILLED CONTAINER, AND METHOD FOR STORING FLUORINATED HYDROCARBON COMPOUND

(57) The present invention is a gas filling container filled with a fluorinated hydrocarbon compound which is obtained by filling the fluorinated hydrocarbon compound represented by the formula: $C_4H_9F$ or $C_5H_{11}F$ within the gas filling container, a method for manufacturing a gas filling container, and a method for storing a fluorinated hydrocarbon compound. The fluorinated hydrocarbon compound in the gas filling container filled with a fluorinated hydrocarbon compound is kept from decomposing, and accordingly the purity of the filled fluorinated hydrocarbon compound does not decrease easily.



Printed by Jouve, 75001 PARIS (FR)

## Description

### Technical Field

The present invention relates to a gas filling container filled with a fluorinated hydrocarbon compound which is obtained by filling the fluorinated hydrocarbon compound represented by the formula: $C_4H_9F$ or $C_5H_{11}F$ within the gas filling container, a method for manufacturing a gas filling container, and a method for storing a fluorinated hydrocarbon compound.

### Background Art

Conventionally, in etching treatment when a semiconductor device or the like is manufactured, a fluorinated hydrocarbon compound is used as an etching gas in order to selectively etch a material to be etched.

High purity (for example, a purity of 99.90% by volume or more) is required of a fluorinated hydrocarbon compound used for etching treatment in order to stably perform fine processing. In addition, in many cases, a gas filling container is filled with a fluorinated hydrocarbon compound, and the fluorinated hydrocarbon compound is stored in this state until the time of use.

Therefore, for a fluorinated hydrocarbon compound used for etching treatment, it is necessary that not only is the purity when a gas filling container is filled with the fluorinated hydrocarbon compound high, but the high purity is maintained in the gas filling container for a long period.

As a method for maintaining the purity of a gas in a gas filling container, a method of subjecting the inner surface of a gas filling container to cleaning treatment is known.

Patent Literature 1 describes a method for subjecting the inner surface of a gas filling container to cleaning treatment, comprising polishing and water-washing the inner surface of a gas filling container and then further washing the inner surface with a low boiling point hydrophilic solvent.

In this literature, it is also described that when the gas filling container subjected to the cleaning treatment is filled with a corrosive gas such as hydrogen chloride, a decrease in the purity of the gas due to metal impurities is suppressed.

### Citation List

#### Patent Literature

Patent Literature 1: Japanese Patent Laid-Open No. 9-302489

### Summary of Invention

#### Technical Problem

As described above, by using the gas filling container subjected to the washing treatment described in Patent Literature 1, a decrease in the purity of a corrosive gas can be suppressed.

However, according to the study of the present inventors, it has been found that when the filling gas is a fluorinated hydrocarbon compound represented by the formula: $C_4H_9F$ or $C_5H_{11}F$, a decrease in the purity of the gas cannot be effectively suppressed even if a gas filling container subjected to such cleaning treatment is used. Further, it has also been found that in a gas filling container subjected to such cleaning treatment, the amount of water in the gas filling container tends to increase over time, and a filled fluorinated hydrocarbon compound cannot be used as an etching gas in some cases.

The present invention has been made in view of the above-described conventional art, and it is an object of the present invention to provide a gas filling container filled with a fluorinated hydrocarbon compound which is obtained by filling the fluorinated hydrocarbon compound represented by the formula: $C_4H_9F$ or $C_5H_{11}F$ within the gas filling container and in which the purity of the filled fluorinated hydrocarbon compound does not decrease easily, a method for manufacturing a gas filling container, and a method for storing a fluorinated hydrocarbon compound.

#### Solution to Problem

The present inventors have studied diligently in order to achieve the above object, and as a result found that (i) when part of the fluorinated hydrocarbon compound represented by the formula: $C_4H_9F$ or $C_5H_{11}F$ decomposes, resulting in formation of a dehydrofluorinated compound (olefin compound), a decrease in purity occurs, that (ii) in a gas

filling container using a steel material such as stainless steel or manganese steel, Lewis acid components such as metal atoms present on its inner surface can function as catalysts that decompose the above fluorinated hydrocarbon compound, and that (iii) by performing the treatment of bringing an amine compound into contact with the inner surface of a gas filling container, the catalytic activity of Lewis acid components is suppressed, and a decrease in the purity of a fluorinated hydrocarbon compound with which the gas filling container is filled can be suppressed, leading to the completion of the present invention.

Thus, according to the present invention, the gas filling containers filled with a fluorinated hydrocarbon compound of [1] to [4], [5] a method for manufacturing a gas filling container, and [6] a method for storing a fluorinated hydrocarbon compound described below are provided.

[1] A gas filling container filled with a fluorinated hydrocarbon compound which is obtained by filling the fluorinated hydrocarbon compound represented by the formula: $C_4H_9F$ or $C_5H_{11}F$ within the gas filling container, wherein the gas filling container, prior to use for filling the fluorinated hydrocarbon compound, has been provided with at least an inner surface thereof made of stainless steel, manganese steel, carbon steel, or chromium molybdenum steel and has been subjected to a treatment of bringing an amine compound into contact with the inner surface, and, after the treatment, a treatment of volatilizing off the amine compound from the gas filling container.

[2] The gas filling container filled with a fluorinated hydrocarbon compound according to [1], wherein the amine compound is a compound having 10 or less carbon atoms represented by any of the following formulas (I) to (III):

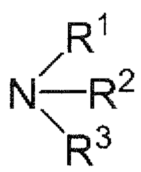

(I)

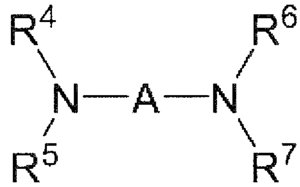

(II)

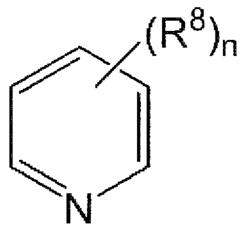

(III)

wherein $R^1$ to $R^7$ each independently represent a hydrogen atom, an alkyl group having 1 to 10 carbon atoms, a cycloalkyl group having 3 to 10 carbon atoms, or an aryl group having 6 to 10 carbon atoms, $R^8$ represents an alkyl group having 1 to 5 carbon atoms or a cycloalkyl group having 3 to 5 carbon atoms, two groups selected from $R^1$ to $R^3$ may be bonded to form a ring, $R^4$ and $R^5$ may be bonded to form a ring, $R^6$ and $R^7$ may be bonded to form a ring, A represents a divalent group having 2 to 10 carbon atoms, n represents an integer of 0 to 5, and when n is 2 or more, $R^8$ may be the same as or different from each other.

[3] The gas filling container filled with a fluorinated hydrocarbon compound according to [1] or [2], wherein the amine compound is a compound having a melting point of 10°C or less.

[4] A gas filling container filled with a fluorinated hydrocarbon compound which is obtained by filling the fluorinated hydrocarbon compound represented by the formula: $C_4H_9F$ or $C_5H_{11}F$ within the gas filling container, wherein the gas filling container, prior to use for filling the fluorinated hydrocarbon compound, has been provided with at least an inner surface thereof made of stainless steel, manganese steel, carbon steel, or chromium molybdenum steel, and when the gas filling container filled with a fluorinated hydrocarbon compound is allowed to stand at 55°C for 30 days from immediately after gas filling, a change in purity of the filled fluorinated hydrocarbon compound obtained by the following formula is 0.02 percent points or less,

$$\text{change in purity} = \text{purity } X_0 - \text{purity } X_1$$

wherein purity $X_0$ represents a purity (% by volume) of the fluorinated hydrocarbon compound used for filling, and purity $X_1$ represents a purity (% by volume) of the fluorinated hydrocarbon compound in the gas filling container after it is allowed to stand at 55°C for 30 days from immediately after gas filling.

[5] A method for manufacturing a gas filling container, comprising performing a treatment of bringing an amine compound into contact with the inner surface of a gas filling container having at least the inner surface made of stainless steel, manganese steel, carbon steel, or chromium molybdenum steel, and, after the treatment, a treatment of volatilizing off the amine compound from the gas filling container.

[6] A method for storing a fluorinated hydrocarbon compound, comprising filling the gas filling container obtained in the [5] with the fluorinated hydrocarbon compound represented by the formula: $C_4H_9F$ or $C_5H_{11}F$.

Advantageous Effect of Invention

According to the present invention, there are provided a gas filling container filled with a fluorinated hydrocarbon compound which is obtained by filling the fluorinated hydrocarbon compound represented by the formula: $C_4H_9F$ or $C_5H_{11}F$ within the gas filling container and in which the purity of the filled fluorinated hydrocarbon compound does not decrease easily, a method for manufacturing a gas filling container, and a method for storing a fluorinated hydrocarbon compound.

Description of Embodiments

The present invention will be itemized as 1) a gas filling container filled with a fluorinated hydrocarbon compound and 2) a method for manufacturing a gas filling container and a method for storing a fluorinated hydrocarbon compound and described in detail below.

1) Fluorinated Hydrocarbon Compound-Filled Gas Filling Container

The gas filling container filled with a fluorinated hydrocarbon compound (hereinafter sometimes referred to as a "filled gas filling container") of the present invention is obtained by filling the fluorinated hydrocarbon compound represented by the formula: $C_4H_9F$ or $C_5H_{11}F$ within the gas filling container. The gas filling container, prior to use for filling the above fluorinated hydrocarbon compound, has been provided with at least the inner surface thereof made of stainless steel, manganese steel, carbon steel, or chromium molybdenum steel and satisfies the requirement of (a) or (b) below.

(a) The gas filling container, prior to use for filling the above fluorinated hydrocarbon compound has been subjected to the treatment of bringing an amine compound into contact with its inner surface, and, after the treatment, the treatment of volatilizing off the amine compound from the gas filling container (The gas filling container is hereinafter sometimes referred to as a "filled gas filling container ($\alpha$)").

(b) When the gas filling container filled with a fluorinated hydrocarbon compound is allowed to stand at 55°C for 30 days from immediately after gas filling, the change in the purity of the fluorinated hydrocarbon compound obtained by the above formula is 0.02 percent points or less (The gas filling container is hereinafter sometimes referred to as a "filled gas filling container ($\beta$)").

[Filled Gas Filling Container ($\alpha$)]

(Fluorinated Hydrocarbon Compound)

The fluorinated hydrocarbon compound constituting the filled gas filling container ($\alpha$) is filled within the gas filling container and is a compound represented by the formula: $C_4H_9F$ or $C_5H_{11}F$ [hereinafter sometimes referred to as a "fluorinated hydrocarbon compound (I)"].

Examples of the compound represented by $C_4H_9F$ include 1-fluorobutane, 2-fluorobutane, 1-fluoro-2-methylpropane, and 2-fluoro-2-methylpropane.

Examples of the compound represented by $C_5H_{11}F$ include 1-fluoropentane, 2-fluoropentane, 3-fluoropentane, 1-fluoro-2-methylbutane, 1-fluoro-3-methylbutane, 2-fluoro-2-methylbutane, 2-fluoro-3-methylbutane, and 1-fluoro-2,2-dimethylpropane.

Among these, as the fluorinated hydrocarbon compound (I), a compound in which a fluorine atom is not bonded to a carbon atom at a molecular end [hereinafter sometimes referred to as a "fluorinated hydrocarbon compound (IA)"] is preferred because the effect of the present invention appears more significantly.

Generally, the fluorinated hydrocarbon compound (IA) decomposes easily compared with a fluorinated hydrocarbon compound in which a fluorine atom is bonded to a carbon atom at a molecular end.

Therefore, conventionally, it has been difficult to fill a gas filling container with the fluorinated hydrocarbon compound (IA) and maintain its purity for a long period.

However, in the filled gas filling container ($\alpha$), even in the case of filling with such a fluorinated hydrocarbon compound (IA), its purity is maintained for a long period.

Examples of the fluorinated hydrocarbon compound (IA) include 2-fluorobutane, 2-fluoro-2-methylpropane, 2-fluoropentane, 3-fluoropentane, 2-fluoro-2-methylbutane, and 2-fluoro-3-methylbutane. 2-Fluorobutane, 2-methyl-2-fluoropropane, or 2-fluoropentane is preferred, and 2-fluorobutane is more preferred.

The purity of the fluorinated hydrocarbon compound (I) when the gas filling container is filled with the fluorinated hydrocarbon compound (I) (purity Xo) is preferably 99.90% by volume or more, more preferably 99.95% by volume or more.

In the present invention, the purity of the fluorinated hydrocarbon compound (I) can be measured by gas chromatography analysis in measurement conditions described later.

(Gas Filling Container)

The gas filling container constituting the filled gas filling container ($\alpha$) has at least the inner surface thereof made of stainless steel, manganese steel, carbon steel, or chromium molybdenum steel. Here, "the gas filling container having at least the inner surface made of stainless steel, manganese steel, carbon steel, or chromium molybdenum steel" means that the gas filling container should be a gas filling container in which at least the inner surface portion of the container comprises stainless steel, manganese steel, carbon steel, or chromium molybdenum steel, and the entire container need not necessarily comprise stainless steel, manganese steel, carbon steel or chromium molybdenum steel.

In gas filling containers in which at least the inner surfaces comprise these steel materials, usually, Lewis acid components such as metal atoms present on the inner surfaces function as catalysts that decompose the fluorinated hydrocarbon compound (I), and therefore, conventionally, a problem has been that when such gas filling containers are filled with the fluorinated hydrocarbon compound (I), a decrease in its purity occurs easily.

On the other hand, in the filled gas filling container ($\alpha$), as described later, the decomposition of the fluorinated hydrocarbon compound (I) does not occur easily, and its purity is maintained for a long period.

The gas filling container used may have the inner surface thereof subjected to polishing treatment.

By subjecting the inner surface of the gas filling container to polishing treatment, the adsorption of water and impurity gases can be suppressed. Therefore, by filling, with the fluorinated hydrocarbon compound (I), the gas filling container having the inner surface thereof subjected to polishing treatment, a decrease in the purity of the fluorinated hydrocarbon compound (I) due to the mixing of water and impurity gases, and the like can be more efficiently suppressed.

The polishing treatment method is not particularly limited. Examples of the polishing treatment method include barrel polishing treatment.

The maximum height (Rmax) of the inner surface of the gas filling container used is preferably 25 $\mu$m or less, more preferably 5 $\mu$m or less. There is no particular lower limit value, but the lower limit value is usually 1 $\mu$m or more.

The maximum height of the inner surface of the gas filling container can be measured using a surface roughness measuring apparatus.

The gas filling container constituting the filled gas filling container ($\alpha$) of the present invention has been subjected to the treatment of bringing an amine compound into contact with its inner surface (hereinafter sometimes referred to as "contact treatment").

As described above, usually, in a gas filling container using a steel material, Lewis acid components such as metal atoms present on its inner surface function as catalysts that decompose the fluorinated hydrocarbon compound (I).

However, the gas filling container constituting the filled gas filling container ($\alpha$) of the present invention has been subjected to the contact treatment, and thus the catalytic activity of Lewis acid components is suppressed. Therefore, in the filled gas filling container ($\alpha$) of the present invention, the decomposition of the fluorinated hydrocarbon compound (I) does not occur easily, and its purity is maintained for a long period.

The amine compound is not particularly limited as long as it can interact with the Lewis acids as a base. Examples of the amine compound include a compound having (a total of) 10 or less carbon atoms represented by any of the following formulas (I) to (III):

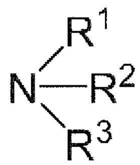

(I)

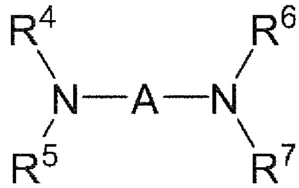

(II)

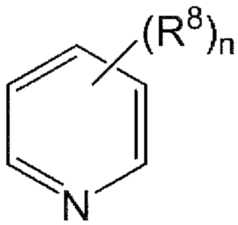

(III)

wherein $R^1$ to $R^7$ each independently represent a hydrogen atom, an alkyl group having 1 to 10 carbon atoms, a cycloalkyl group having 3 to 10 carbon atoms, or an aryl group having 6 to 10 carbon atoms, $R^8$ represents an alkyl group having 1 to 5 carbon atoms or a cycloalkyl group having 3 to 5 carbon atoms, two groups selected from $R^1$ to $R^3$ may be bonded to form a ring, $R^4$ and $R^5$ may be bonded to form a ring, $R^6$ and $R^7$ may be bonded to form a ring, A represents a divalent group having 2 to 10 carbon atoms, n represents an integer of 0 to 5, and when n is 2 or more, $R^8$ may be the same as or different from each other.

When the amine compound has 10 carbon atoms or less, the melting point of the amine compound is sufficiently low, and handling as a liquid or a gas is easy under contact conditions, and the contact efficiency can be increased.

Each alkyl group of $R^1$ to $R^7$ has 1 to 10 carbon atoms, preferably 1 to 5. When it has more carbon atoms, the treatment of volatilizing off the amine compound may be difficult.

Examples of the alkyl group of $R^1$ to $R^7$ include a methyl group, an ethyl group, an n-propyl group, an isopropyl group, an n-butyl group, a t-butyl group, an isobutyl group, a s-butyl group, an n-pentyl group, an n-hexyl group, an n-heptyl group, an n-octyl group, an n-nonyl group, and an n-decyl group.

Any alkyl group of $R^1$ to $R^7$ may have a hydrogen atom thereof replaced by a hydrocarbon group: for example, a cycloalkyl group such as a cyclopentyl group or a cyclohexyl group; or an aryl group such as a phenyl group.

Each cycloalkyl group of $R^1$ to $R^7$ has 3 to 10 carbon atoms, preferably 3 to 6. When it has more carbon atoms, the treatment of volatilizing off the amine compound may be difficult.

Examples of the cycloalkyl group of $R^1$ to $R^7$ include a cyclopropyl group, a cyclobutyl group, a cyclopentyl group, a cyclohexyl group, and a cycloheptyl group.

Any cycloalkyl group of $R^1$ to $R^7$ may have a hydrogen atom thereof replaced by a hydrocarbon group: for example, an alkyl group such as a methyl group, an ethyl group, an n-propyl group, an isopropyl group, an n-butyl group, a t-butyl group, or an isobutyl group; or an aryl group such as a phenyl group.

Each aryl group of $R^1$ to $R^7$ has 6 to 10 carbon atoms, preferably 6 to 8. When it has more carbon atoms, the treatment of volatilizing off the amine compound may be difficult.

Examples of the aryl group of $R^1$ to $R^7$ include a phenyl group, a tolyl group, and a naphthyl group.

The alkyl group of $R^8$ has 1 to 5 carbon atoms, preferably 1 to 3. When it has more carbon atoms, the treatment of volatilizing off the amine compound may be difficult.

Examples of the alkyl group of $R^8$ include a methyl group, an ethyl group, an n-propyl group, an isopropyl group, an n-butyl group, a t-butyl group, an isobutyl group, a s-butyl group, and an n-pentyl group.

The alkyl group of $R^8$ may have a hydrogen atom thereof replaced by a hydrocarbon group such as a cyclopentyl group.

The cycloalkyl group of $R^8$ has 3 to 5 carbon atoms, preferably 4 to 5. When it has more carbon atoms, the treatment of volatilizing off the amine compound may be difficult.

Examples of the cycloalkyl group of $R^8$ include a cyclopropyl group, a cyclobutyl group, and a cyclopentyl group.

The cycloalkyl group of $R^8$ may have a hydrogen atom thereof replaced by a hydrocarbon group such as a methyl group.

As described above, the groups represented by $R^1$ to $R^8$ are hydrocarbon groups and do not comprise atoms other than carbon atoms and hydrogen atoms, such as oxygen atoms and halogen atoms. When the groups represented by $R^1$ to $R^8$ are hydrocarbon groups, the effect of the invention of the present application is more easily obtained.

The divalent group of A has 2 to 10 carbon atoms, preferably 2 to 5. When it has more carbon atoms, the treatment of volatilizing off the amine compound may be difficult.

Examples of the divalent group of A include an ethylene group, a propylene group, a trimethylene group, and a phenylene group.

Examples of the amine compound represented by formula (I) include ammonia; primary amines such as methylamine, ethylamine, ethylenimine, n-propylamine, isopropylamine, cyclopropylamine, azetidine, 1-methylaziridine, n-butylamine, t-butylamine, n-pentylamine, n-hexylamine, 2-ethylhexylamine, n-nonylamine, n-decylamine, benzylamine, cyclohexylamine, and aniline; secondary amines such as dimethylamine, diethylamine, ethylmethylamine, di-n-propylamine, diisopropylamine, di-n-butylamine, di-t-butylamine, and di-n-pentylamine; tertiary amines such as trimethylamine, dimethylethylamine, triethylamine, tri-n-propylamine, and triisopropylamine; and cyclic amines such as azacyclobutane, pyrrolidine, piperidine, and hexamethylenimine.

Examples of the amine compound represented by formula (II) include ethylenediamine, propylenediamine, tetramethylenediamine, and N,N,N',N'-tetramethylethylenediamine.

Examples of the amine compound represented by formula (III) include pyridine, 2-methylpyridine, 3-methylpyridine, and 4-methylpyridine.

One of these amine compounds can be used alone, or two or more of these amine compounds can be used in combination.

The melting point of the amine compound is preferably 10°C or less, more preferably 0°C or less. When the melting point of the amine compound is 10°C or less, handling as a liquid or a gas is easy under contact conditions, and the contact efficiency can be increased.

The boiling point of the amine compound is not particularly limited but is preferably 200°C or less from the viewpoint of being able to more easily perform the treatment of volatilizing off the amine compound from the gas filling container.

The temperature when the contact treatment is performed is not particularly limited but is usually 15 to 60°C, preferably 20 to 50°C.

The treatment time of the contact treatment is not particularly limited and can be appropriately set according to the amine compound used but is usually 1 to 48 hours, preferably 6 to 24 hours.

As long as the effect of the present invention is obtained, the method of the contact treatment is not limited.

For example, when the amine compound used is a liquid under the contact conditions, the contact treatment can be performed by placing the amine compound in the gas filling container, hermetically sealing the gas filling container, shaking this, and then allowing it to stand.

When the amine compound is a liquid, its viscosity is preferably less than 20 cps, more preferably less than 15 cps, at 20°C. When the viscosity satisfies this prescription, the amine compound more easily comes into contact with the container inner surface, and the contact treatment efficiency can be increased.

The amount of the liquid amine compound used in the contact treatment is not particularly limited. The amount of the amine compound used is preferably 10 to 100% by volume, more preferably 20 to 90% by volume, based on the internal volume of the container.

When the amine compound used is a gas under the contact conditions, the contact treatment can be performed by filling the gas filling container with the gaseous amine compound and then allowing the gas filling container to stand.

The amount of the gaseous amine compound used in the contact treatment is not particularly limited. The amount of the amine compound used is preferably 10 to 100% by volume, more preferably 20 to 100% by volume, based on all gas components in the container.

The gas filling container constituting the filled gas filling container ($\alpha$) of the present invention has been subjected to the treatment of volatilizing off the amine compound from the gas filling container (hereinafter sometimes referred to as "volatilizing-off treatment") after the contact treatment.

By performing the volatilizing-off treatment to remove the amine compound, a decrease in the purity of the fluorinated hydrocarbon compound (I) due to the residue of the amine compound can be avoided.

The method of the volatilizing-off treatment is not particularly limited.

For example, when the contact treatment is performed using a liquid amine compound, the volatilizing-off treatment can be performed by placing the gas filling container in an environment in which this amine compound vaporizes.

It is possible to perform suction treatment or tilt the gas filling container to discharge the amine compound from the gas filling container to the outside as the liquid, and then perform the volatilizing-off treatment on the amine compound remaining in the gas filling container.

When the contact treatment is performed using a gaseous amine compound, the gaseous amine compound can be removed by sucking the contents of the gas filling container (In the present invention, such a mode is also included in the "volatilizing-off". In other words, the "volatilizing-off" in the present invention means that the amine compound is discharged out of the gas filling container in a gaseous state, and a change in the state of the amine compound from a liquid to a gas is not a requirement of the "volatilizing-off" in the present invention.)

The treatment conditions in the volatilizing-off treatment can be appropriately determined considering the boiling point of the amine compound used, and the like.

The temperature in the gas filling container is usually 10 to 200°C, preferably 20 to 150°C. When the treatment temperature is low, solidification occurs depending on the amine compound, and therefore the volatilizing-off efficiency may decrease. On the other hand, when the treatment temperature is high, the coating on the container outer surface melts, and poor appearance can occur.

The pressure in the gas filling container is usually -101 to 0 kPa (G), preferably -101 to -10 kPa (G). When the treatment pressure is high (more than 0 kPa (G)), there is a possibility that the amine compound in the container cannot be completely removed.

The treatment time is usually 0.1 to 5 hours, preferably 0.5 to 3 hours. When the treatment time is short, the volatilizing-off treatment is insufficient, and the purity of the fluorinated hydrocarbon compound (I) may decrease after it is filled. Long treatment time leads to the deterioration of productivity during container manufacture.

The amine compound is not substantially contained in the gas filling container after the volatilizing-off treatment.

For example, when the contents of the gas filling container used in the present invention are analyzed by gas chromatography, the amine compound is not detected.

As the gas filling container constituting the filled gas filling container ($\alpha$) of the present invention, usually, one obtained by washing and removing the amine compound using a washing solvent or the like between the contact treatment and the volatilizing-off treatment is not used. When such washing treatment is performed, the effect of the present invention may not be obtained.

(Filled Gas Filling Container)

The filled gas filling container ($\alpha$) can be obtained by filling the fluorinated hydrocarbon compound (I) into the gas filling container subjected to the above contact treatment and volatilizing-off treatment.

The filling method is not particularly limited, and a known method can be utilized.

In the filled gas filling container ($\alpha$), the filled fluorinated hydrocarbon compound (I) does not decompose easily, and its purity does not decrease easily.

The purity of the fluorinated hydrocarbon compound (I) in the filled gas filling container ($\alpha$) after it is allowed to stand at 55°C for 30 days from immediately after filling the fluorinated hydrocarbon compound (I) (purity $X_1$) is preferably 99.90% by volume or more, more preferably 99.95% by volume or more.

The change in purity obtained by the following formula is preferably 0.02 percent points or less, more preferably 0.01 percent points or less.

$$\text{change in purity} = \text{purity } X_0 - \text{purity } X_1$$

wherein purity $X_0$ represents the purity (% by volume) of the fluorinated hydrocarbon compound used for filling, and purity $X_1$ represents the purity (% by volume) of the fluorinated hydrocarbon compound in the gas filling container after a lapse of 30 days from immediately after it is filled.

[Filled Gas Filling Container ($\beta$)]

(Fluorinated Hydrocarbon Compound)

The fluorinated hydrocarbon compound constituting the filled gas filling container ($\beta$) is filled within the gas filling container and is similar to the fluorinated hydrocarbon compound (I) constituting the filled gas filling container ($\alpha$). A preferred fluorinated hydrocarbon compound is also the same as the fluorinated hydrocarbon compound (I) constituting the filled gas filling container ($\alpha$).

(Gas Filling Container)

The gas filling container constituting the filled gas filling container ($\beta$) has at least the inner surface thereof

made of stainless steel, manganese steel, carbon steel, or chromium molybdenum steel. The meaning of "the gas filling container having at least the inner surface made of stainless steel, manganese steel, carbon steel, or chromium molybdenum steel" is the same as the one described for the filled gas filling container (α).

In the filled gas filling container (β), the filled fluorinated hydrocarbon compound (I) does not decompose easily, and its purity does not decrease easily.

When the filled gas filling container (β) is allowed to stand at 55°C for 30 days from immediately after gas filling, a change in purity of the filled fluorinated hydrocarbon compound obtained by the following formula is 0.02 percent points or less, preferably 0.01 percent or less.

$$\text{change in purity} = \text{purity } X_0 - \text{purity } X_1$$

wherein purity $X_0$ represents the purity (% by volume) of the fluorinated hydrocarbon compound used for filling, and purity $X_1$ represents the purity (% by volume) of the fluorinated hydrocarbon compound in the filled gas filling container (β) after it is allowed to stand at 55°C for 30 days from immediately after gas filling.

The method for manufacturing the filled gas filling container (β) is not particularly limited.

For example, the filled gas filling container (β) can be efficiently manufactured by filling, with the fluorinated hydrocarbon compound (I), a gas filling container obtained by performing the treatment of bringing an amine compound into contact with the inner surface of a gas filling container used, and, after the treatment, the treatment of volatilizing off the amine compound from the gas filling container.

Examples of the treatment of bringing an amine compound into contact with the inner surface of a gas filling container, and the treatment of volatilizing off the amine compound from the gas filling container after the preceding include those similar to the contact treatment and the volatilizing-off treatment shown in the description of the filled gas filling container (α).

According to the filled gas filling container (filled gas filling container (α) or (β)) of the present invention, the high purity of the fluorinated hydrocarbon compound (I) can be maintained for a long period. Therefore, the filled gas filling container of the present invention is preferably utilized for etching treatment when a semiconductor device or the like is manufactured.

2) Method for Manufacturing Gas Filling Container and Method for Storing Fluorinated Hydrocarbon Compound

A method for manufacturing a gas filling container according to the present invention comprises performing the treatment of bringing an amine compound into contact with the inner surface of a gas filling container having at least the inner surface made of stainless steel, manganese steel, carbon steel, or chromium molybdenum steel, and, after the treatment, the treatment of volatilizing off the amine compound from the gas filling container.

Examples of the gas filling container having at least the inner surface made of stainless steel, manganese steel, carbon steel, or chromium molybdenum steel that is used in the manufacturing method of the present invention include one similar to the one previously described as the gas filling container constituting the filled gas filling container of the present invention.

Examples of the treatment of bringing an amine compound into contact with the inner surface of a gas filling container and the treatment of volatilizing off the amine compound from the gas filling container after the preceding treatment in the manufacturing method of the present invention include those similar to the contact treatment and the volatilizing-off treatment shown in the description of the filled gas filling container of the present invention.

According to the manufacturing method of the present invention, a gas filling container in which the catalytic activity of Lewis acid components such as metal atoms present on the inner surface of the gas filling container is suppressed can be efficiently obtained.

The gas filling container obtained by the manufacturing method of the present invention does not easily cause the decomposition of a fluorinated hydrocarbon compound represented by the formula: $C_4H_9F$ or $C_5H_{11}F$ and therefore is preferably used in filling with these fluorinated hydrocarbon compounds.

Examples of these fluorinated hydrocarbon compounds include those similar to the fluorinated hydrocarbon compound (I) constituting the filled gas filling container of the present invention.

A method for storing a fluorinated hydrocarbon compound according to the present invention comprises filling a gas filling container obtained by the method of the present invention with a fluorinated hydrocarbon compound represented by the formula: $C_4H_9F$ or $C_5H_{11}F$.

By utilizing the method of the present invention, the fluorinated hydrocarbon compound represented by the formula: $C_4H_9F$ or $C_5H_{11}F$ can be stably stored for a long period.

Examples

The present invention will be described in more detail below by giving Examples and Comparative Examples. The present invention is not limited to these examples in any way.

[Gas Chromatography Analysis]

In the Examples and the Comparative Examples, gas chromatography analysis (GC analysis) was performed in order to obtain the purity of fluorinated hydrocarbon compounds.
The analysis conditions of the GC analysis are as follows.

Apparatus: Agilent (registered trademark) 7890A (manufactured by Agilent)
Column: product name "Inert Cap (registered trademark) 1" manufactured by GL Sciences, length 60 m, inner diameter 0.25 mm, film thickness 1.5 μm
Column temperature: retention at 40°C for 20 minutes Injection temperature: 80°C
Carrier gas: nitrogen
Split ratio: 40/1
Detector: FID

[Example 1]

500 mL of pyridine was placed in a gas filling container made of stainless steel and having a volume of 3.4 L [gas filling container (1)], and then the gas filling container was hermetically sealed. Then, this was shaken at 25°C for 60 minutes and then allowed to stand at 25°C for 12 hours to perform contact treatment.
Then, the gas filling container was tilted to remove the pyridine in the gas filling container, and the gas filling container was placed, as it was, under the conditions of 115°C and -101 kPa (G) for 1 hour to perform volatilizing-off treatment.
The gas filling container was cooled to 25°C and then connected to a gas filling line connected to a tank made of stainless steel (subjected to electropolishing treatment) containing 2-fluorobutane (purity: 99.95% by volume, amount of HF-removed compound: 0.02% by volume). Then, the gas filling line was subjected to batch purge treatment (the treatment of filling with nitrogen gas followed by evacuation), and then the gas filling container was filled with 1 kg of 2-fluorobutane to obtain a 2-fluorobutane-filled gas filling container.
The obtained 2-fluorobutane-filled gas filling container was allowed to stand at 55°C for 30 days, and then the purity of 2-fluorobutane in the gas filling container was measured. The result is shown in Table 1.
When the contents of the 2-fluorobutane-filled gas filling container were analyzed by chromatography, pyridine used for the contact treatment was not detected.

[Example 2]

A 2-fluorobutane-filled gas filling container was obtained and the purity of 2-fluorobutane in the gas filling container was measured as in Example 1 except that pyridine was changed to n-butylamine in Example 1. The result is shown in Table 1.

[Example 3]

A 2-fluorobutane-filled gas filling container was obtained and the purity of 2-fluorobutane in the gas filling container was measured as in Example 1 except that pyridine was changed to n-hexylamine in Example 1. The result is shown in Table 1.

[Example 4]

A 2-fluorobutane-filled gas filling container was obtained and the purity of 2-fluorobutane in the gas filling container was measured as in Example 1 except that pyridine was changed to di-n-propylamine in Example 1. The result is shown in Table 1.

[Example 5]

A 2-fluorobutane-filled gas filling container was obtained and the purity of 2-fluorobutane in the gas filling

container was measured as in Example 1 except that pyridine was changed to triethylamine in Example 1. The result is shown in Table 1.

[Example 6]

A 2-fluorobutane-filled gas filling container was obtained and the purity of 2-fluorobutane in the gas filling container was measured as in Example 1 except that the gas filling container (1) was changed to a gas filling container made of manganese steel [gas filling container (2)] in Example 1. The result is shown in Table 1.

[Example 7]

A 2-fluorobutane-filled gas filling container was obtained and the purity of 2-fluorobutane in the gas filling container was measured as in Example 1 except that the gas filling container (1) was changed to a gas filling container made of chromium molybdenum steel [gas filling container (3)] in Example 1. The result is shown in Table 1.

[Comparative Example 1]

A 2-fluorobutane-filled gas filling container was obtained and the purity of 2-fluorobutane in the gas filling container was measured as in Example 1 except that the gas filling container (1) was used without being subjected to the contact treatment and the volatilizing-off treatment. The result is shown in Table 1.

[Comparative Example 2]

A 2-fluorobutane-filled gas filling container was obtained and the purity of 2-fluorobutane in the gas filling container was measured as in Example 1 except that pyridine was changed to methanol in Example 1. The result is shown in Table 1.

[Comparative Example 3]

A 2-fluorobutane-filled gas filling container was obtained and the purity of 2-fluorobutane in the gas filling container was measured as in Example 1 except that pyridine was changed to water in Example 1. The result is shown in Table 1.

[Comparative Example 4]

A 2-fluorobutane-filled gas filling container was obtained and the purity of 2-fluorobutane in the gas filling container was measured as in Example 1 except that pyridine was changed to isopropyl alcohol in Example 1. The result is shown in Table 1.

[Comparative Example 5]

A 2-fluorobutane-filled gas filling container was obtained and the purity of 2-fluorobutane in the gas filling container was measured as in Example 6 except that the gas filling container (2) was used without being subjected to the contact treatment and the volatilizing-off treatment. The result is shown in Table 1.

[Comparative Example 6]

A 2-fluorobutane-filled gas filling container was obtained and the purity of 2-fluorobutane in the gas filling container was measured as in Example 7 except that the gas filling container (3) was used without being subjected to the contact treatment and the volatilizing-off treatment. The result is shown in Table 1.

Table 1

| | Fluorinated hydrocarbon compound | Material of gas filling container | Treatment liquid | Purity (% by volume) | | [Purity $X_0$] - [Purity $X_1$] | Treatment liquid residue |
|---|---|---|---|---|---|---|---|
| | | | | [Purity $X_0$] before filling | [Purity $X_1$] after a lapse of 30 days at 55°C after filling | | |
| Example 1 | 2-Fluorobutane | Stainless steel | Pyridine | 99.95 | 99.95 | 0.00 | Not detected |
| Example 2 | | Stainless steel | n-Butylamine | 99.95 | 99.95 | 0.00 | Not detected |
| Example 3 | | Stainless steel | n-Hexylamine | 99.95 | 99.95 | 0.00 | Not detected |
| Example 4 | | Stainless steel | Di-n-propylamine | 99.95 | 99.95 | 0.00 | Not detected |
| Example 5 | | Stainless steel | Triethylamine | 99.95 | 99.95 | 0.00 | Not detected |
| Example 6 | | Mn steel | Pyridine | 99.95 | 99.95 | 0.00 | Not detected |
| Example 7 | | CrMo steel | Pyridine | 99.95 | 99.95 | 0.00 | Not detected |
| Comparative Example 1 | 2-Fluorobutane | Stainless steel | Untreated | 99.95 | 99.91 | 0.04 | - |
| Comparative Example 2 | | Stainless steel | Methanol | 99.95 | 99.68 | 0.27 | Not detected |
| Comparative Example 3 | | Stainless steel | Water | 99.95 | 98.59 | 1.36 | Not detected |
| Comparative Example 4 | | Stainless steel | IPA | 99.95 | 99.92 | 0.03 | Not detected |
| Comparative Example 5 | | Mn steel | Untreated | 99.95 | 98.97 | 0.98 | - |
| Comparative Example 6 | | CrMo steel | Untreated | 99.95 | 99.26 | 0.69 | - |

From Table 1, the followings are found.

In the 2-fluorobutane-filled gas filling containers of Examples 1 to 7, even after a lapse of 30 days, the decomposition reaction of 2-fluorobutane hardly proceeds, and its high purity is maintained.

On the other hand, in the 2-fluorobutane-filled gas filling containers of Comparative Examples 1 to 6, after a lapse of 30 days, the decomposition reaction of 2-fluorobutane proceeds considerably, and the purity decreases greatly.

[Example 8]

A 2-fluorobutane-filled gas filling container was obtained as in Example 6. The obtained 2-fluorobutane-filled gas filling container was allowed to stand at 55°C, and after 1 day, after 8 days, and after 30 days, the amount of water in the contents of the 2-fluorobutane-filled gas filling container was measured by gas chromatography. The results are shown in Table 2.

Table 2

| Standing period | 1 day | 8 days | 30 days |
|---|---|---|---|
| Water content (ppm by volume) | 5.9 | 6.9 | 4.9 |

[Comparative Example 7]

A 2-fluorobutane-filled gas filling container was obtained as in Example 8 except that pyridine was changed to a 3.4% by weight diethanolamine aqueous solution in Example 8. The obtained 2-fluorobutane-filled gas filling container was allowed to stand at 55°C, and after 0 days (from immediately after the 2-fluorobutane-filled gas filling container was allowed to stand at 55°C), after 3 days, and after 12 days, the amount of water in the contents of the 2-fluorobutane-filled gas filling container was measured by gas chromatography. The results are shown in Table 3.

Table 3

| Standing period | 0 days | 3 days | 12 days |
|---|---|---|---|
| Water content (ppm by volume) | 20.1 | 46.0 | 416.8 |

From Table 2 and Table 3, the followings are found.
In the 2-fluorobutane-filled gas filling container obtained in Example 8, even after a lapse of 30 days, the amount of water in the gas filling container hardly changed.
On the other hand, in the 2-fluorobutane-filled gas filling container obtained in Comparative Example 7, the amount of water in the gas filling container increased over time.
It is considered that a slight amount of diethanolamine remaining in the gas filling container decomposes, and water is produced.

## Claims

1. A gas filling container filled with a fluorinated hydrocarbon compound which is obtained by filling the fluorinated hydrocarbon compound represented by the formula: $C_4H_9F$ or $C_5H_{11}F$ within the gas filling container, wherein the gas filling container, prior to use for filling the fluorinated hydrocarbon compound, has been provided with at least an inner surface thereof made of stainless steel, manganese steel, carbon steel, or chromium molybdenum steel and has been subjected to a treatment of bringing an amine compound into contact with the inner surface, and, after the treatment, a treatment of volatilizing off the amine compound from the gas filling container.

2. The gas filling container filled with a fluorinated hydrocarbon compound according to claim 1, wherein the amine compound is a compound having 10 or less carbon atoms represented by any of the following formulas (I) to (III) :

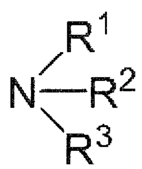

(I)

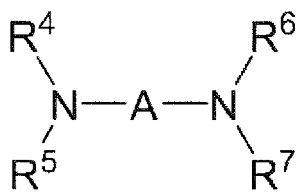

(II)

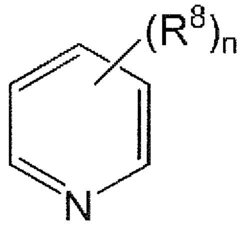

(III)

wherein $R^1$ to $R^7$ each independently represent a hydrogen atom, an alkyl group having 1 to 10 carbon atoms, a cycloalkyl group having 3 to 10 carbon atoms, or an aryl group having 6 to 10 carbon atoms, $R^8$ represents an alkyl group having 1 to 5 carbon atoms or a cycloalkyl group having 3 to 5 carbon atoms, two groups selected from $R^1$ to $R^3$ may be bonded to form a ring, $R^4$ and $R^5$ may be bonded to form a ring, $R^6$ and $R^7$ may be bonded to form a ring, A represents a divalent group having 2 to 10 carbon atoms, n represents an integer of 0 to 5, and when n is 2 or more, $R^8$ may be the same as or different from each other.

**3.** The gas filling container filled with a fluorinated hydrocarbon compound according to claim 1 or 2, wherein the amine compound is a compound having a melting point of 10°C or less.

**4.** A gas filling container filled with a fluorinated hydrocarbon compound which is obtained by filling the fluorinated hydrocarbon compound represented by the formula: $C_4H_9F$ or $C_5H_{11}F$ within the gas filling container, wherein
the gas filling container, prior to use for filling the fluorinated hydrocarbon compound, has been provided with at least an inner surface thereof made of stainless steel, manganese steel, carbon steel, or chromium molybdenum steel, and when the gas filling container filled with a fluorinated hydrocarbon compound is allowed to stand at 55°C for 30 days from immediately after gas filling, a change in purity of the filled fluorinated hydrocarbon compound obtained by the following formula is 0.02 percent points or less,

$$\text{change in purity} = \text{purity } X_0 - \text{purity } X_1$$

wherein purity $X_0$ represents a purity (% by volume) of the fluorinated hydrocarbon compound used for filling, and purity $X_1$ represents a purity (% by volume) of the fluorinated hydrocarbon compound in the gas filling container after it is allowed to stand at 55°C for 30 days from immediately after gas filling.

**5.** A method for manufacturing a gas filling container, comprising performing a treatment of bringing an amine compound into contact with the inner surface of a gas filling container having at least the inner surface made of stainless steel, manganese steel, carbon steel, or chromium molybdenum steel, and, after the treatment, a treatment of volatilizing off the amine compound from the gas filling container.

**6.** A method for storing a fluorinated hydrocarbon compound, comprising filling the gas filling container obtained in claim 5 with the fluorinated hydrocarbon compound represented by the formula: $C_4H_9F$ or $C_5H_{11}F$.

## INTERNATIONAL SEARCH REPORT

International application No.
PCT/JP2016/076310

A. CLASSIFICATION OF SUBJECT MATTER
*F17C1/10*(2006.01)i, *F16J12/00*(2006.01)i

According to International Patent Classification (IPC) or to both national classification and IPC

B. FIELDS SEARCHED

Minimum documentation searched (classification system followed by classification symbols)
F17C1/10, F16J12/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-140860 A (Nippon Zeon Co., Ltd.), 03 August 2015 (03.08.2015), entire text (Family: none) | 1-4,6 |
| X<br>Y | JP 2000-257795 A (Mitsui Chemicals, Inc.), 19 September 2000 (19.09.2000), entire text; all drawings (Family: none) | 5<br>1-4,6 |
| Y | JP 9-302489 A (Mitsui Toatsu Chemicals, Inc.), 25 November 1997 (25.11.1997), entire text (Family: none) | 3 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 December 2016 (05.12.16) | 13 December 2016 (13.12.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9302489 A